Europäisches Patentamt

European Patent Office

Office européen des brevets

(11) Numéro de publication: **0 403 393**
**A1**

## (12) DEMANDE DE BREVET EUROPEEN

(21) Numéro de dépôt: 90401667.2

(22) Date de dépôt: **15.06.90**

(51) Int. Cl.⁵: **B65B 9/04, B65B 61/18, B65D 77/30**

(30) Priorité: **16.06.89 FR 8908004**

(43) Date de publication de la demande:
**19.12.90 Bulletin 90/51**

(84) Etats contractants désignés:
**AT BE CH DE DK ES GB IT LI NL SE**

(71) Demandeur: **MECAPLASTIC Société Anonyme française**
**8, rue Diderot**
**F-93177 Bagnolet Cedex(FR)**

(72) Inventeur: **Robache, Patrick**
**8, Villa Georgina**
**F-75020 Paris(FR)**

(74) Mandataire: **Tony-Durand, Serge**
**Cabinet Tony-Durand 77, rue Boissière**
**F-75116 Paris(FR)**

(54) **Procédé d'emballage d'un produit quelconque, par exemple un produit alimentaire et emballage ainsi réalisé.**

(57) Dans le matériau complexe avec lequel est réalisée chaque barquette (2), on prévoit une couche intermédiaire (3) en matière adhésive disposée entre une couche inférieure (4) de matière thermo-plastique et une pellicule supérieure (5) soudable à chaud avec le film de fermeture (1) ou une pellicule similaire (6) prévue sur la face interne de ce film. Avant la soudure de celui-ci sur une barquette (2), on réalise, sur les bords de celle-ci, une ligne de découpe (12) dans la pellicule supérieure (5) du matériau complexe de cette barquette, et ce parallèlement à l'emplacement de la bande ultérieure (8) de soudure et du côté interne par rapport à celle-ci. L'invention a également pour objet les emballages ainsi réalisés. Ceux-ci ont pour avantage d'être ré-utilisables. En effet, lors du retrait ultérieur du film de fermeture (1) d'une telle barquette, la couche (3) de matière adhésive se trouve mise à nu à l'endroit de la bande annulaire (8) de soudure, ce qui permet de re-fixer ensuite en place le film de fermeture (1) par simple pression contre la bande adhésive ainsi obtenue.

Fig. 1

EP 0 403 393 A1

La présente invention concerne les emballages utilisés pour le conditionnement de certains produits, notamment de produits alimentaires, et qui sont constitués par une barquette en matière thermo-plastique sur les bords de laquelle est rapporté un film de fermeture fixé de façon étanche par soudure.

Les emballages de ce genre ont l'avantage de permettre une excellente conservation des produits contenus dans ceux-ci. Par ailleurs, ces emballages sont faciles à utiliser puisqu'il suffit de retirer le film de fermeture pour pouvoir accéder à leur contenu. Toutefois, ces emballages ont pour inconvénient qu'il n'est pas possible de les refermer après avoir prélevé une partie seulement de leur contenu. Or pour de nombreux produits alimentaires, il est fréquent que l'on ait besoin que d'une partie du contenu d'un tel emballage.

Pour le cas d'un produit pulvérulent pouvant sortir par écoulement à travers des trous de passage, il a déjà été proposé, dans le DE 2.109.416, une solution permettant de fermer les trous de passage au moyen d'un élément de recouvrement fixé de façon amovible au moyen d'une couche d'adhésif, de façon à pouvoir être ensuite soulevé pour une autre opération de prélèvement. Selon cette solution, le réceptacle contenant le produit pulvérulent est fermé par une plaque formant couvercle, qui est soudée sur les bords de ce réceptacle et qui comporte des trous pour la sortie du produit pulvérulent correspondant. Cette plaque porte une feuille de recouvrement fixée sur elle par une couche d'adhésif et il est prévu, le long de deux bords opposés de l'ensemble, deux lignes d'affaiblissement permettant de soulever une bande ainsi détachée de la feuille de recouvrement afin de libérer les trous de passage. Pour fermer ensuite ceux-ci, il suffit d'appliquer à nouveau cette bande contre la plaque formant couvercle.

Une telle solution ne peut en aucune façon convenir dans le cas de produits alimentaires autres que des produits pulvérulents. En effet cette solution ne permet pas de dégager l'ouverture du réceptacle correspondant, de sorte qu'il ne serait pas possible d'extraire des produits alimentaires en feuilles ou en tranches, tels que du jambon ou des tranches de viande, ni des produits de consistance solide ou pâteuse. Par ailleurs la solution décrite dans le DE 2.109.416 a pour inconvénient qu'après fermeture de la bande soulevable de recouvrement, le produit contenu dans le réceptacle peut venir en contact avec les parties de la couche d'adhésif qui se trouvent en regard des trous prévus dans la plaque formant couvercle. Or ceci est tout à fait mauvais du point de vue de l'hygiène alimentaire.

C'est pourquoi la présente invention a pour objet un procédé d'emballage permettant de disposer d'un emballage du type en cause qui peut être complètement ouvert, puis être à nouveau fermé après prélèvement d'une partie du contenu.

A cet effet l'invention a pour objet un procédé d'emballage d'un produit quelconque, par exemple un produit alimentaire, dans une barquette de conditionnement en matière thermo-plastique sur les bords de laquelle est rapporté un film de fermeture, fixé de façon étanche par une soudure effectuée selon une bande annulaire, et dont une partie au moins peut être soulevée puis fixée à nouveau en place grâce à une couche de matière adhésive, caractérisé en ce que :

- dans le matériau complexe avec lequel est réalisée chaque barquette, on prévoit une couche intermédiaire de matière adhésive disposée entre une couche inférieure de matière thermo-plastique et une pellicule supérieure soudable à chaud avec le film de fermeture ou une pellicule similaire prévue sur la face interne de ce film,

- et, avant la soudure de celui-ci sur une barquette, on réalise, sur les bords de celle-ci, une ligne de découpe dans la pellicule supérieure du matériau complexe de cette barquette, et ce parallèlement à l'emplacement de la bande ultérieure de soudure, et du côté interne par rapport à celle-ci.

Ainsi, lors du retrait ultérieur du film de fermeture d'une telle barquette, la couche de matière adhésive se trouve mise à nu à l'endroit de la bande annulaire de soudure, ce qui permet de refixer ensuite en place le film de fermeture par simple pression contre la bande adhésive ainsi obtenue.

La présente invention a également pour objet les emballages réalisés par mise en oeuvre du procédé défini ci-dessus.

Un tel emballage est constitué par une barquette de conditionnement sur les bords de laquelle est rapporté un film de fermeture fixé de façon étanche par une soudure effectuée selon une bande annulaire et dont une partie au moins peut être soulevée, puis fixée à nouveau en place grâce à une couche de matière adhésive, cet emballage étant caractérisé en ce que :

- le matériau complexe, avec lequel est réalisée la barquette de conditionnement, comprend une couche intermédiaire de matière adhésive disposée entre une couche inférieure de matière thermoplastique et une pellicule supérieure soudable à chaud avec le film de fermeture ou une pellicule similaire prévue sur la face interne de ce film,

- et sur les bords de la barquette de conditionnement, la pellicule supérieure soudable présente une ligne de découpe qui s'étend parallèlement à la bande annulaire de soudure du film de fermeture, et du côté interne par rapport à cette bande,

- de sorte que lors du retrait ultérieur de ce film, la couche de matière adhésive prévue dans le matériau complexe de la barquette de conditionnement se trouve mise à nu à l'endroit de la bande annulaire de soudure, ce qui permet de re-fixer ensuite en place le film de fermeture par simple pression contre la bande adhésive ainsi obtenue.

Cependant d'autres particularités et avantages de l'objet de l'invention apparaitront au cours de la description suivante. Celle-ci est donnée en référence aux dessins annexés à simple titre indicatif, et sur lesquels :

La figure 1 est une vue en perspective d'une barquette de conditionnement faisant partie d'un emballage selon l'invention.

La figure 2 en est une vue partielle en coupe à échelle différente selon la ligne II-II de la figure 1.

La figure 3 est une vue similaire à la figure 2, mais qui représente le film de fermeture après que celui-ci ait été détaché, tout au moins partiellement, de la barquette de conditionnement.

La figure 4 est une vue en coupe longitudinale du matériau complexe utilisé pour la fabrication d'une telle barquette.

La figure 5 est une vue schématique en coupe longitudinale de l'installation utilisée pour la fabrication d'un emballage selon l'invention.

Ainsi qu'il a déjà été indiqué, le procédé selon l'invention a pour but de réaliser un emballage du type en cause dont le film de fermeture 1 peut être fixé à nouveau sur la barquette correspondante de conditionnement 2 après avoir été détaché de celle-ci, tout au moins en partie.

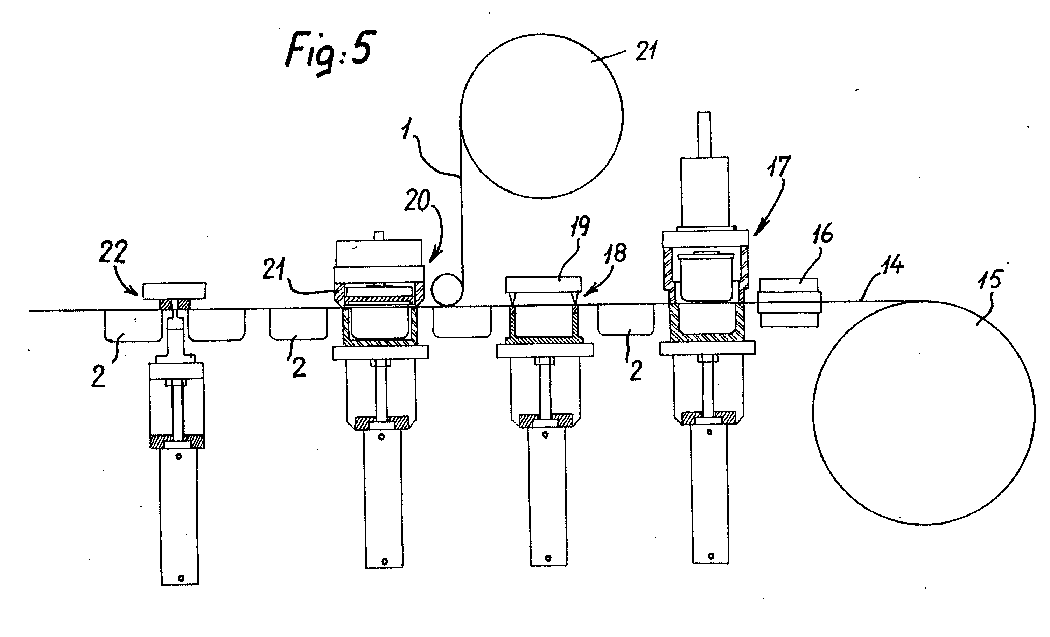

Selon une première caractéristique de ce procédé, on utilise, pour la fabrication des barquettes 2, un matériau complexe comprenant une couche intermédiaire 3 en matière adhésive. Celle-ci est disposée entre une couche inférieure 4 en matière plastique, qui est destinée à constituer le corps même de chaque barquette, et une pellicule supérieure 5, également en matière thermo-plastique, mais qui est choisie en une matière soudable avec la matière thermo-plastique du film de fermeture 1 ou avec la matière d'une pellicule similaire 6 de soudure prévue sur la face interne de ce film. Les barquettes 2 de conditionnement peuvent être fabriquées séparément par moulage. Cependent elles peuvent également être réalisées en continu par thermo-formage, comme cela est le cas dans l'exemple illustré à la figure 5.

Dans l'un et l'autre cas, chacune de ces barquettes comporte un rebord d'entourage 7 sur le dessus duquel le film de fermeture est fixé par une soudure affectant la forme d'une bande annulaire 8.

Les barquettes de conditionnement 1 peuvent présenter tout contour voulu. Ainsi comme cela est le cas dans l'exemple représenté, elles peuvent comporter un contour rectangulaire. Dans un tel cas, afin de permettre le dégagement d'une patte 9 de préhension du film de fermeture 1, l'un des coins est remplacé par une partie en biais 10. Dans un tel cas, la bande annulaire 8 de soudure comporte à cet endroit une partie également disposée en biais. Ceci permet de dégager une plage libre 11 au dessus de laquelle s'étendra la patte 9 de préhension du film 1 de fermeture après que celui-ci ait été soudé en place.

Cependant, conformément à une seconde caractéris tique essentielle du procédé selon l'invention, une ligne 12 de découpe est réalisée au dessus du rebord 7 dans la pellicule soudable 5 de chaque barquette avant la soudure du film de fermeture 1, cette ligne de découpe s'étendant parallèlement à la bande de soudure 8 et du côté interne par rapport à celle-ci. Eventuellement, cette ligne de découpe peut aussi s'étendre dans la couche intermédiaire 3 en matière adhésive. A l'endroit de la plage 11 mentionnée précédemment, il est prévu une autre ligne similaire de découpe 13 qui est disposée du côté externe. Celle-ci sépare donc la plage 11 de l'emplacement de la bande annulaire 8 de soudure.

Dans le cas où les barquettes 2 sont réalisées en continu par thermo-formage, leur matériau complexe de fabrication est utilisé sous la forme d'un film 14 dévidé à partir d'une bobine d'alimentation 15. Après passage dans un poste de pré-chauffage 16, ce film parvient à un poste 17 de thermo-formage (voir figure 5). Les barquettes 2 réalisées dans ce poste parviennent ensuite à un poste 18 où sont réalisées les lignes de découpe 12 et 13. Ce poste, qui comporte un poinçon mobile 19 de découpe, est situé en amont du poste 20 de soudure du film 1 de fermeture. Celui-ci est dévidé à partir d'une bobine 21 d'alimentation. La soudure de ce film est réalisée au moyen d'une électrode mobile 21 de soudure. Enfin, en aval de ce poste de soudure, il est prévu un poste 22 de séparation des différents emballages réalisés au moyen de cette installation.

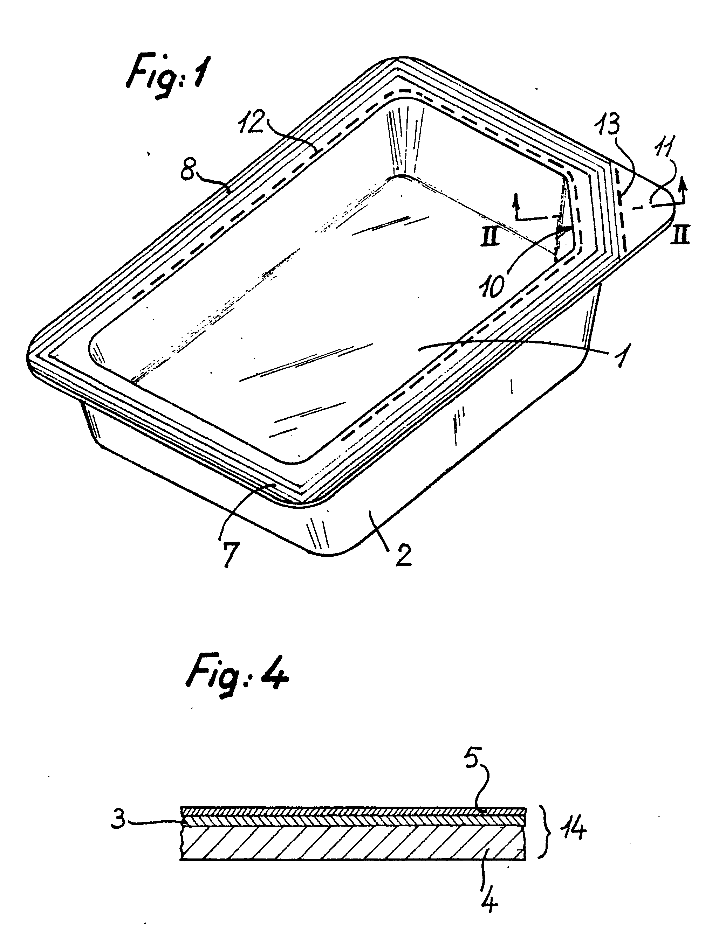

Il convient de noter que la ligne interne 12 de découpe peut être pratiquée sur une partie seulement de la périphérie de chaque barquette 2. En l'occurrence, comme représenté sur la figure 1, cette ligne de découpe peut ne pas s'étendre sur le côté qui est opposé à la patte de préhension 9 du film de fermeture.

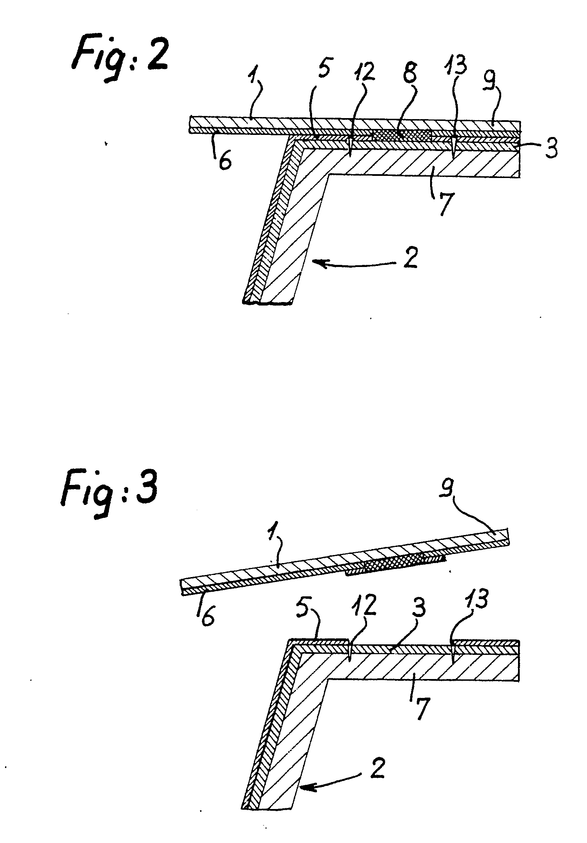

Grâce à la structure ainsi obtenue pour les emballages réalisés grâce à ce procédé, le retrait tout au moins partiel du film de fermeture 1 a pour effet de mettre à nu la partie de la couche intermédiaire 3 en matière adhésive qui se trouve située en regard de la bande annulaire de soudure 8. En effet lorsque l'on relève la patte de préhension 9 comme représenté sur la figure 3, le film de fermeture 1 entraîne avec lui la partie de la pellicule supérieure 5 du rebord de la barquette 2 qui est soudée à la pellicule interne 6 de ce film. Ceci est rendu possible par la présence de la ligne interne de découpe 12. En conséquence, la portion correspondante de la couche adhésive 3 est mise à nu.

Dans ces conditions, il est parfaitement possible de fixer ensuite à nouveau en place le film de fermeture en appliquant simplement celui-ci contre la portion mise à nu de la couche adhésive 3. Du reste cette opération peut être renouvelée un certain nombre de fois, ce qui permet de prélever successivement différentes parties du contenu de l'emballage correspondant.

Il convient de noter qu'à l'endroit de la patte de préhension 9 du film de fermeture, la ligne externe de découpe 13 a pour résultat de permettre le soulèvement aisé de cette patte par rapport aux rebords de la barquette correspondante de conditionnement. Cependant la patte de préhension pourrait être réalisée différemment. Eventuellement, cette patte pourrait faire saillie au-delà du rebord de chaque barquette 2 pour permettre une préhension encore plus aisée.

Le principal avantage des emballages selon l'invention réside dans le fait que ceux-ci sont réutilisables, puisqu'ils peuvent être refermés après prélèvement d'une partie de leur contenu, contrairement à ce qui est le cas avec les emballages actuels de ce genre. En effet, avec ceux-ci le film de fermeture ne peut pas être remis en place après avoir été détaché. Ceci impose donc de transférer le contenu d'un tel emballage dans un autre récipient ou similaire. Or cet inconvénient se trouve complètement supprimé dans le cas de l'emballage selon l'invention.

Dans l'exemple décrit ci-dessus, les barquettes de conditionnement des emballages selon l'invention sont réalisées en continu par thermo-formage. Cependant elles pourraient tout aussi bien être fabriquées séparément, les unes après les autres par moulage, le film de fermeture étant rapporté ultérieurement après que les lignes de découpe 12 et 13 aient été réalisées sur les bords de chaque barquette.

## Revendications

1. Procédé d'emballage d'un produit quelconque, par exemple un produit alimentaire, dans une barquette de conditionnement en matière thermoplastique sur les bords de laquelle est rapporté un film de fermeture fixé de façon étanche par une soudure effectuée selon une bande annulaire, et dont une partie au moins peut être soulevée puis fixée à nouveau en place grâce à une couche de matière adhésive, caractérisé en ce que :
- dans le matériau complexe (14) avec lequel est réalisée chaque barquette (2), on prévoit une couche intermédiaire (3) en matière adhésive disposée entre une couche inférieure (4) de matière thermo-plastique et une pellicule supérieure (5) soudable à chaud avec le film de fermeture (1) ou une pellicule similaire (6) prévue sur la face interne de ce film,
- et, avant la soudure de celui-ci sur une barquette (2), on réalise, sur les bords de celle-ci, une ligne de découpe (12) dans la pellicule supérieure (5) du matériau complexe de cette barquette, et ce parallèlement à l'emplacement de la bande ultérieure (8) de soudure et du côté interne par rapport à celle-ci,
- de sorte que lors du retrait ultérieur du film de fermeture (1) d'une telle barquette la couche (3) de matière adhésive se trouve mise à nu à l'endroit de la bande annulaire (8) de soudure, ce qui permet de re-fixer ensuite en place le film de fermeture (1) par simple pression contre la bande adhésive ainsi obtenue.

2. Emballage réalisé par mise en oeuvre du procédé selon la revendication 1, et constitué par une barquette de conditionnement sur les bords de laquelle est rapporté un film de fermeture fixé de façon étanche par une soudure effectuée selon une bande annulaire, et dont une partie au moins peut être soulevée puis fixée à nouveau en place grâce à une couche de matière adhésive, caractérisé en ce que :
- le matériau complexe (14), avec lequel est réalisée la barquette de conditionnement (2), comprend une couche intermédiaire (3) de matière adhésive disposée entre une couche inférieure (4) de matière thermo-plastique et une pellicule supérieure (5) soudable à chaud avec le film de fermeture (1) ou une pellicule similaire (6) prévue sur la face interne de ce film,
- et sur les bords de la barquette de conditionnement, la pellicule supérieure soudable (5) présente une ligne de découpe (12) qui s'étend parallèlement à la bande annulaire (8) de soudure du film de fermeture, et du côté interne par rapport à cette bande,
- de sorte que lors du retrait ultérieur de ce film (1) la couche (3) de matière adhésive, prévue dans le matériau complexe (14) de la barquette de conditionnement (2) se trouve mise à nu à l'endroit de la bande annulaire de soudure, ce qui permet de re-fixer ensuite en place le film de fermeture par simple pression contre la bande adhésive ainsi obtenue.

3. Emballage selon la revendication 2, caractérisé en ce que la ligne de découpe (12), pratiquée dans la pellicule supérieure (5) du matériau complexe (14) constituant chaque barquette (2), s'étend sur une partie seulement de la périphérie de celle-ci, cette ligne de découpe (12) étant interrompue sur le côté opposé à la patte de préhension (9) prévue sur le film de fermeture (1).

4. Emballage selon la revendication 2 ou 3, caractérisé en ce qu'à l'un de ses coins, le rebord d'entourage (7) de chaque barquette (2) comporte une plage libre (11) au dessus de laquelle est prévue une patte de préhension (9) du film de fermeture correspondant (1), et cette plage est séparée du reste du rebord (7) par une ligne de découpe (13) pratiquée dans la pellicule supérieure soudable (5) du matériau complexe (14), parallèlement à la partie correspondante de la bande annulaire de soudure (8), mais du côté externe par rapport à celle-ci.

*Fig:1*

*Fig:4*

*Fig.2*

*Fig.3*

Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | DE-A-2 109 416  (GUNDERMANN) <br> * Page 7, ligne 12 - page 10, ligne 12; figures 1-3 * <br> ----- | 1-4 | B 65 B   9/04 <br> B 65 B  61/18 <br> B 65 D  77/30 |

DOMAINES TECHNIQUES
RECHERCHES (Int. Cl.5)

B 65 B
B 65 D

Le présent rapport a été établi pour toutes les revendications

| Lieu de la recherche | Date d'achèvement de la recherche | Examinateur |
|---|---|---|
| LA HAYE | 06-08-1990 | CLAEYS H.C.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)